## Europäisches Patentamt
## European Patent Office
## Office européen des brevets

(11) Veröffentlichungsnummer: **0 364 992**
**A2**

(12) **EUROPÄISCHE PATENTANMELDUNG**

(21) Anmeldenummer: **89119355.9**

(22) Anmeldetag: **18.10.89**

(51) Int. Cl.⁵: **A63B 22/02**

(30) Priorität: **21.10.88 DE 3835979**

(43) Veröffentlichungstag der Anmeldung:
**25.04.90 Patentblatt 90/17**

(84) Benannte Vertragsstaaten:
**CH GB IT LI NL**

(71) Anmelder: **WOODWAY AG**
**Rue de la Treille 3**
**CH-2100 Neuchatel(CH)**

(72) Erfinder: **Schönenberger, Willi**

**CH-8821 Schönenberg(CH)**

(74) Vertreter: **Patentanwälte Grünecker,**
**Kinkeldey, Stockmair & Partner**
**Maximilianstrasse 58**
**D-8000 München 22(DE)**

(54) **Endloses Laufband für das Fitnesstraining.**

(57) Die Erfindung betrifft endlose Laufbänder für das Fitnesstraining und/oder die Rehabilitation mit zwei im Abstand parallel zueinander angeordneten endlosen Zahnriemen, die mit ihren gezahnten Unterseiten mit den Oberflächen von angetriebenen bzw. nicht angetriebenen Umlenkrollen zusammenwirken, wobei an den Oberflächen der beiden Zahnriemen Trittlamellen befestigt sind, die sich quer zur Bewegungsrichtung des Laufbandes von Zahnriemen zu Zahnriemen erstrecken und die Lauffläche des Laufbandes bilden. Diese endlosen Laufbänder zeichnen sich dadurch aus, daß in der Umfangsoberfläche wenigstens einer Umlenkrolle eine ringartige Vertiefung ausgebildet ist, so daß lediglich ein Teil der Breitenabmessung der Umlenkrollenoberfläche mit den Unterseiten der Zahnriemen in Berührung gelangt.

Fig. 2

## Endloses Laufband für das Fitnesstraining

Die Erfindung bezieht sich auf endlose Laufbänder für das Fitnesstraining und/oder für die Rehabilitation der im Oberbegriff des Anspruchs 1 angegebenen Gattung. Ein solches endloses Laufband ist bereits aus der US-PS 4,334,676 der Anmelderin bekannt.

Gattungsgemäße Laufbänder für das Fitnesstraining und die Rehabilitation weisen zwei im Abstand voneinander angeordnete endlose Zahnriemen auf, die an ihren vorderen und hinteren Enden jeweils um Umlenkrollen herumgeführt sind. Zumeist sind die beiden vorderen Umlenkrollen antreibbar. Die Zahnriemen wirken mit ihrer gezahnten Unterseite mit den Oberseiten der Umlenkrollen zusammen. Auf den glatten Oberflächen der Zahnriemen sind sich von Zahnriemen zu Zahnriemen erstreckend eine Vielzahl von die Laufband-Trittfläche bildenden Leichtmetall-Lamellen mit Hilfe von Nieten oder Schrauben befestigt. Es versteht sich, daß der Abstand der beiden Zahnriemen voneinander gleich dem Abstand der beiden vorderen Umlenkrollen bzw. der beiden hinteren Umlenkrollen eines Laufbandes ist.

Bei Laufbändern dieser bekannten Gattung hat es sich als nachteilig herausgestellt, daß mit höherer Umlaufgeschwindigkeit des Laufbandes, d.h. mit höherer Drehzahl der Umlenkrollen, die Abrollgeräusche des Zahnriemens auf den Umlenkrollen deutlich zunehmen, was als Geräuschbelästigung empfunden wird.

Der Erfindung liegt die Aufgabe zugrunde, ein gattungsgemäßes endloses Laufband so auszugestalten, daß die Abrollgeräusche im Betrieb deutlich herabgesetzt sind.

Diese Aufgabe wird bei einem gattungsgemäßen Laufband, also bei einem endlosen Laufband für das Fitnesstraining und/oder die Rehabilitation mit zwei im Abstand parallel zueinander angeordneten endlosen Zahnriemen, die mit ihren gezahnten Unterseiten mit den Oberflächen von angetriebenen bzw. nicht angetriebenen Umlenkrollen zusammenwirken, wobei an den Oberflächen der beiden Zahnriemen Trittlamellen befestigt sind, die sich quer zur Bewegungsrichtung des Laufbandes von Zahnriemen zu Zahnriemen erstrecken und die Lauffläche des Laufbandes bilden, dadurch gelöst, daß in der Umfangsoberfläche wenigstens einer Umlenkrolle eine ringartige Vertiefung ausgebildet ist, so daß lediglich ein Teil der Breitenabmessung der Umlenkrollenoberfläche mit den Unterseiten der Zahnriemen in Berührung gelangt.

Der mit Hilfe der Erfindung erzielbare technische Fortschritt besteht in einer überraschend großen Verminderung der Abrollgeräusche.

Nach einer bevorzugten Ausführungsform der Erfindung ist die ringförmige Vertiefung in der Mitte des Umlenkrollenoberfanges ausgebildet. Dadurch verbleiben als Auflageflächen für die Zahnriemenunterseite lediglich zwei Randstege der Umlenkrollenumfänge, auf welchen die Zahnriemen aufliegen.

Nach einer weiteren vorteilhaften Ausgestaltung der Erfindung erstreckt sich die Vertiefung nicht über den gesamten Umfang der Umlenkrollen, sondern lediglich über einen Teilabschnitt oder mehrere Teilabschnitte der Umfangsrollenoberfläche.

Als vorteilhaft hat es sich herausgestellt, daß die Vertiefung in Form einer Sicke aus der Umlenkrollenoberfläche herausgedreht ist.

Die Erfindung wird im folgenden anhand von Ausführungsbeispielen und unter Bezug auf die Zeichnung näher beschrieben.

In dieser zeigt:

Fig. 1 eine schematische Aufsicht auf den Umfang einer gezahnten Umlenkrolle und

Fig. 2 eine schematische Aufsicht auf den Umfang einer nichtgezahnten (glatten) Umfangsrolle.

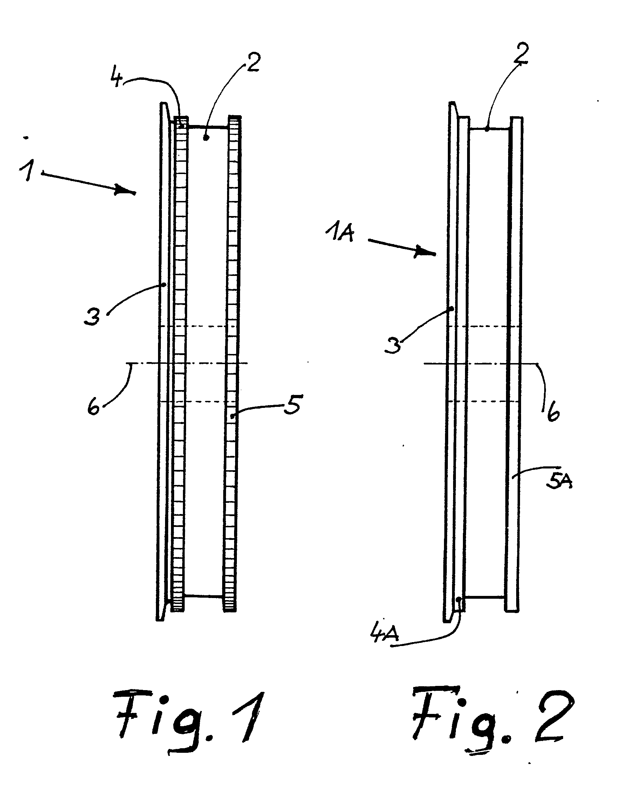

Wie Fig. 1 zu entnehmen, weist eine gezahnte Umlenkrolle 1 linksseitig einen Randflansch 3 sowie zwei parallel zueinander angeordnete Zahnreihen 4 und 5 auf. Die beiden Zahnreihen 4 und 5 sind im Umfang der Umlenkrolle 1 ausgebildet. Zwischen den beiden Zahnreihen 4 und 5 ist eine ringförmige Vertiefung 2 in der Umlenkrollenoberfläche ausgebildet. Der Durchmesser der ringförmigen Vertiefung 2 ist geringer als der Durchmesser der beiden Zahnreihen 4 und 5, welche über denselben Durchmesser verfügen. Die gezahnte Unterseite eines (nicht dargestellten) Zahnriemens greift in die Zähne der Zahnreihen 4 und 5 ein.

Dadurch, daß nicht die Gesamtbreite der Umlenkrollenoberfläche von der Zahnriemenunterseite beaufschlagt wird, sondern lediglich der von den beiden Zahnreihen gebildete Teilbereich, ist die beim Abrollen eines Zahnriemens beaufschlagte Oberfläche der Umlenkrollenoberfläche deutlich kleiner als ohne die Vertiefung 2.

Es versteht sich, daß die Zähne in den Zahnreihen 4 und 5 mit den in den Unterseiten eines Zahnriemens ausgebildeten Zähnen zusammenwirken, um die Zahnriemen anzutreiben. Die Drehachse der Umlenkrolle 1 ist mit dem Bezugszeichen 6 bezeichnet.

Fig. 2 zeigt eine nichtgezahnte Umlenkrolle 1A, welche anstelle der Zahnreihen 4 und 5 gemäß Fig. 1 mit glatten Flanschen 4A und 5A versehen ist. Wie beim Ausführungsbeispiel gemäß Fig. 1 ist zwischen den beiden Flanschen 4A und 5A eine ringförmige Vertiefung in der Umfangsoberfläche der Umlenkrol le 1A ausgebildet. Die beiden glatten

2

Flansche 4A und 5A haben einen im wesentlichen übereinstimmenden Durchmesser, welcher größer ist als der Durchmesser der ringförmigen Vertiefung 2.

Wie beim Ausführungsbeispiel gemäß Fig. 1 ist die Auflagefläche für einen nichtdargestellten Zahnriemen auf dem Umfang der Umlenkrolle 1A durch die Oberfläche der beiden glatten Flansche 4A und 5A gegeben. Dieser zur Beaufschlagung durch den Zahnriemen zur Verfügung stehende Oberflächenbereich der Umlenkrollenoberfläche ist vergleichsweise gering und beträgt bei beiden Ausführungsformen gemäß Fig. 1 sowie gemäß Fig. 2 vorzugsweise nicht mehr als 50 % der Gesamtoberfläche des Umlenkrollenumfanges.

Auch in Fig. 2 ist die Drehachse der Umlenkrolle 1A mit dem Bezugszeichen 6 bezeichnet.

In den Figuren 1 und 2 ist die im Umlenkrollenumfang ausgebildete Vertiefung in der Mitte der Umfangsoberfläche dargestellt, so daß die einen größeren Durchmesser aufweisenden Zahnreihen 4, 5 bzw. Flansche 4A, 5A zu beiden Seiten der Vertiefung 2 ausgebildet sind. Es versteht sich jedoch, daß die Vertiefung 2 nicht in der Mitte der Umfangsoberfläche sondern aus der Mitte versetzt ausgebildet sein kann. Ferner kann die Vertiefung 2 beispielsweise die rechte oder linke Hälfte der Gesamtumfangsoberfläche einnehmen, während die verbleibende Hälfte für die gezahnte bzw. glatte Umfangsfläche verbleibt, mit welcher der Zahnriemen in Eingriff bzw. Berührungskontakt ist.

Im dargestellten Ausführungsbeispiel ist die Vertiefung 2 als ringförmige Vertiefung ausgebildet, die sich über 360° des Umfangsrollenumfanges erstreckt. Es versteht sich, daß diese Vertiefung 2 von Umfangsbereichen unterbrochen sein kann, die den gleichen Durchmesser aufweisen wie die Zahnreihen 4 und 5 (Fig. 1) bzw. die glatten Flansche 4A und 5A gemäß Fig. 2. Es ist auch möglich, anstelle einer einzigen relativ breiten Vertiefung 2 mehrere vergleichsweise schmaldimensionierte Vertiefungen nebeneinander in der Umfangsoberfläche der Umlenkrollen vorzusehen.

Eine weitere Verminderung der Abrollgeräusche läßt sich dadurch erzielen, daß man zwischen die nichtdargestellte glatte Oberfläche des Zahnriemens und die darauf befestigte Unterseite der gleichfalls nichtdargestellten Leichtmetall-Lamellen einen dünnen Schaumstoffstreifen einbringt, der mitvernietet oder -verschraubt wird. Nach einer vorteilhaften Ausgestaltung wird dieser dünne Schaumstoffstreifen in Form eines längsliegenden Riemens zwischen der glatten Oberfläche des Zahnriemens und den querliegenden Leichtmetall-Lamellen angeordnet.

**Ansprüche**

1. Endloses Laufband für das Fitnesstraining und/oder die Rehabilitation mit zwei im Abstand parallel zueinander angeordneten endlosen Zahnriemen, die mit ihren gezahnten Unterseiten mit den Oberflächen von angetriebenen bzw. nicht angetriebenen Umlenkrollen zusammenwirken, wobei an den Oberflächen der beiden Zahnriemen Trittlamellen befestigt sind, die sich quer zur Bewegungsrichtung des Laufbandes von Zahnriemen zu Zahnriemen erstrecken und die Lauffläche des Laufbandes bilden,
dadurch **gekennzeichnet,**
daß in der Umfangsoberfläche wenigstens einer Umlenkrolle (1, 1A) eine ringartige Vertiefung ausgebildet ist, so daß lediglich ein Teil der Breitenabmessung der Umlenkrollenoberfläche mit den Unterseiten der Zahnriemen in Berührung gelangt.

2. Laufband nach Anspruch 1, dadurch gekennzeichnet, daß die Vertiefung (2) in der Umfangsmitte der Umlenkrolle ausgebildet ist.

3. Laufband nach Anspruch 1, dadurch gekennzeichnet, daß sich die Vertiefung (2) nicht über den gesamten Umfang der Umlenkrolle (1, 1A) erstreckt.

4. Laufband nach einem der Ansprüche 1 bis 3, dadurch gekennzeichnet, daß die Vertiefung (2) in Form einer Sicke aus dem Umfang der Umlenkrolle (1, 1A) herausgedreht ist.

*Fig. 1*

*Fig. 2*